# EUROPEAN PATENT APPLICATION

(11) **EP 3 543 849 A1**
(43) Date of publication of application: **25.09.2019**
(21) Application number: 17877795.9
(22) Date of filing: 23.08.2017
(51) Int. Cl.: G06F 9/455

(54) **DRIVER MANAGEMENT METHOD AND HOST MACHINE**

(30) Priority: 07.12.2016 CN 201611118688
(71) Applicant: Huawei Technologies Co., Ltd., Longgang District Shenzhen, Guangdong 518129 (CN)
(72) Inventor: GAO, Xiong, Shenzhen Guangdong 518129 (CN)
(74) Representative: Gill Jennings & Every LLP
(86) International application number: PCT/CN2017/098625
(87) International publication number: WO 2018/103372

(57) **Abstract**

Embodiments of the present invention disclose a driver management method and a host. The method includes: allocating, by a host, a first hardware device to a target virtual machine on the host, where the first hardware device is deployed on the host; obtaining, by the host, a target driver package of the first hardware device from N pre-stored driver packages, where the N driver packages are driver packages of N types of hardware devices, a type of the first hardware device is one of the N types of hardware devices, and N is a positive integer greater than or equal to 1; adding, by the host, the target driver package into the target virtual machine to enable the target virtual machine to read the target driver package; and installing, by the target virtual machine, the target driver package, where a driver obtained by installing the target driver package is used by the target virtual machine to invoke the first hardware device in a hardware pass-through manner. According to the present invention, a storage resource can be saved.

## Description

### TECHNICAL FIELD

The present invention relates to the field of computer technologies, and in particular, to a driver management method and a host.

### BACKGROUND

A cloud computing platform can virtualize various physical resources based on a virtualization technology to form virtual machines, and each virtual machine can independently run its own operating system and application program. Currently, an increasing quantity of services are gradually migrated to the cloud computing platform for being processed by a virtual machine managed by the cloud computing platform. Many services on the cloud computing platform have a special requirement for an amount of computation, a processing delay, or the like. Therefore, the virtual machine needs to depend on a specific hardware acceleration device to process these services. When invoking the hardware acceleration device, the virtual machine (English: Virtual Machine, VM for short) needs to use a driver of the hardware acceleration device. There are two drive manners: a front-end/back-end drive manner and a hardware pass-through manner.

In the front-end/back-end drive manner, a back-end driver is deployed on a host, and the host directly accesses the hardware acceleration device by using a device driver corresponding to the hardware acceleration device; and a front-end driver is deployed on the VM to provide an application programming interface (English: Application Programming Interface, API for short) to a VM application program. The VM initiates an acceleration request to the host by using the API. After receiving the acceleration request, the host invokes the hardware acceleration device by using the driver of the hardware acceleration device. In this way, the VM indirectly invokes the hardware acceleration device.

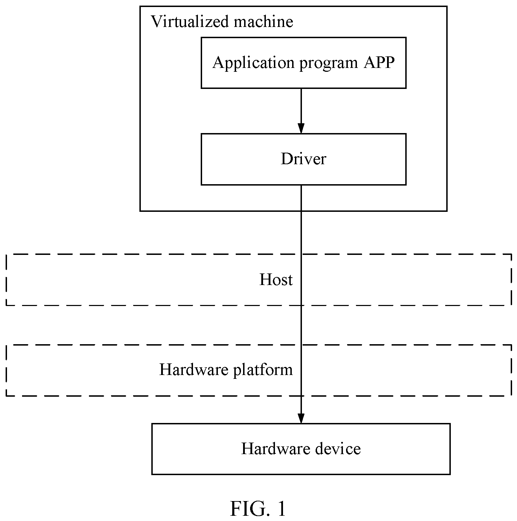

In the hardware pass-through manner, the entire hardware acceleration device is passed through inside of the VM, and the driver of the hardware acceleration device is installed on the VM. Therefore, the VM can invoke the hardware acceleration device by using the driver, as shown in FIG. 1.

To avoid direct coupling between a VM and a hardware acceleration device (that is, to prevent that a VM can invoke only some specific types of hardware acceleration devices), an acceleration capability-based allocation and management technology for an acceleration device is put forward in the network function virtualization (English: Network Function Virtualization, NFV for short) standard IFA004. A main idea of this technology is: When scheduling and starting the VM, the cloud computing platform allocates, according to an acceleration capability requirement of the VM (for example, an acceleration capability of 100 Mbps in a data encryption standard (English: Data Encryption Standard, DES for short)), a hardware acceleration device with a corresponding capability, and then, the VM invokes the hardware acceleration device in either the front-end/back-end drive manner or the hardware pass-through manner.

The following describes in detail a process of invoking a hardware acceleration device by a VM in the hardware pass-through manner, and steps are as follows:
1. A plurality of drivers are pre-installed on the VM, and each driver correspondingly supports hardware acceleration devices of limited hardware models.
2. When scheduling a hardware resource for the VM, a cloud computing platform selects an idle hardware acceleration device of a corresponding model that can be passed through, and allocates the hardware acceleration device to the VM.
3. The cloud computing platform starts the VM and passes through the hardware acceleration device to the VM in the hardware pass-through manner.
4. After detecting the hardware acceleration device allocated to the VM, the VM may select, from the plurality of pre-installed drivers, a driver corresponding to the hardware acceleration device to invoke the hardware acceleration device.

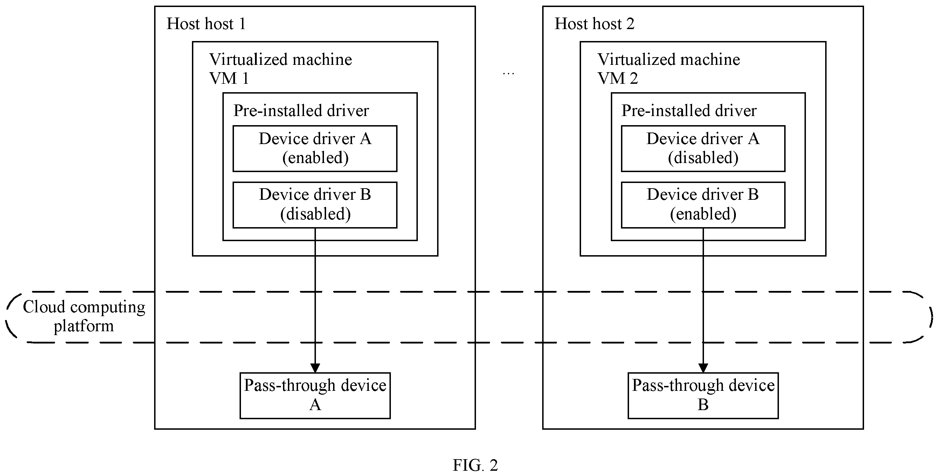

Referring to FIG. 2, FIG. 2 is a schematic diagram of a scenario in which a hardware acceleration device is invoked in a hardware pass-through manner in the prior art. A cloud computing platform in FIG. 2 includes a host 1, a host 2, a hardware acceleration device A, and a hardware acceleration device B. Further, a driver of the hardware acceleration device A and a driver of the hardware acceleration device B are pre-installed on a virtual machine VM 1; and the driver of the hardware acceleration device A and the driver of the hardware acceleration device B are pre-installed on a virtual machine VM 2. After scheduling by the cloud computing platform, the VM 1 runs on the host 1 and the hardware acceleration device A is allocated to the VM 1; and the VM 2 runs on the host 2 and the hardware acceleration device B is allocated to the VM 2. In this way, the VM 1 may invoke the hardware acceleration device A based on the driver of the hardware acceleration device A, and the VM 2 may invoke the hardware acceleration device B based on the driver of the hardware acceleration device B.

A prior-art problem lies in that, to ensure that a VM can invoke each hardware acceleration device allocated to the VM by a cloud computing platform, a driver of each hardware acceleration device needs to be pre-installed on the VM, and a relatively large quantity of storage resources are occupied if a relatively large quantity of drivers are pre-installed. For example, relatively large disk space is occupied.

### SUMMARY

Embodiments of the present invention disclose a driver management method and a host, so as to save a storage resource.

According to a first aspect, an embodiment of the present invention provides a driver management method. The method includes: allocating, by a host, a first hardware device to a target virtual machine on the host, where the first hardware device is deployed on the host; obtaining, by the host, a target driver package of the first hardware device from N pre-stored driver packages, where the N driver packages are driver packages of N types of hardware devices, a type of the first hardware device is one of the N types of hardware devices, and N is a positive integer greater than or equal to 1; adding, by the host, the target driver package into the target virtual machine to enable the target virtual machine to read the target driver package; and installing, by the target virtual machine, the target driver package, where a driver obtained by installing the target driver package is used by the target virtual machine to invoke the first hardware device in a hardware pass-through manner.

By performing the foregoing steps, when allocating the first hardware device to the target virtual machine, the host adds the target driver package corresponding to the first hardware device into a location that can be used to store the target driver package on the target virtual machine. Correspondingly, the target virtual machine reads and installs the target driver package to obtain the driver of the first hardware device, and then invokes the first hardware device based on the driver. In this process, there is no need to pre-install, in the target virtual machine, a driver package corresponding to each of a plurality of hardware devices, but instead, once the hardware device is allocated to the target virtual machine, a driver package corresponding to a hardware device is almost immediately installed. This saves a storage resource occupied by the target virtual machine. In addition, in the prior art, a total quantity of pre-installed driver packages is limited, so that the target virtual machine can access only a limited quantity of hardware devices. The virtual machine in this embodiment of the present invention has a capability of invoking any hardware device, provided that a driver package of a hardware device is installed before the hardware device is invoked.

With reference to the first aspect, in a first possible implementation of the first aspect, after the installing, by the target virtual machine, the target driver package, the method further includes: uninstalling, by the target virtual machine, a target driver, and installing a driver update package, where the target driver is a driver obtained by installing the target driver package, and the driver update package is an upgrade package of the target driver package or is a driver package of a second hardware device re-allocated by the host to the target virtual machine; and when the driver update package is the upgrade package of the target driver package, a driver obtained by installing the driver update package is used by the target virtual machine to invoke the first hardware device; or when the target driver package is the driver package of the second hardware device re-allocated by the host to the target virtual machine, a driver obtained by installing the driver update package is used by the target virtual machine to invoke the second hardware device.

That is, this embodiment of the present invention supports driver uninstallation and updating, and is applicable to a scenario in which the driver is upgraded and a scenario in which the driver is changed due to hardware device replacement. This improves user experience.

With reference to the first aspect or the first possible implementation of the first aspect, in a second possible implementation of the first aspect, the allocating, by a host, a first hardware device to a target virtual machine on the host includes: allocating, by the host, the first hardware device to the target virtual machine when starting the target virtual machine.

That is, a prerequisite for performing an operation related to allocation of the first hardware device and installation of the driver corresponding to the first hardware device that is performed after the first hardware device is selected is that the host is started. This further clarifies that, according to this embodiment of the present invention, a driver of a pass-through device is installed in real time, instead of being pre-installed.

With reference to the first aspect, the first possible implementation of the first aspect, or the second possible implementation of the first aspect, in a third possible implementation of the first aspect, the adding, by the host, the target driver package into the target virtual machine to enable the target virtual machine to read the target driver package includes: storing, by the host, the target driver package in a file system of the target virtual machine for the target virtual machine to read; or storing the target driver package in a preset shared memory in the host for the target virtual machine to read.

With reference to the first aspect, the first possible implementation of the first aspect, the second possible implementation of the first aspect, or the third possible implementation of the first aspect, in a fourth possible implementation of the first aspect, the N types of hardware devices are N types of hardware acceleration devices.

Currently, a relatively unified standard for hardware acceleration devices has not been formed in the industry, and drivers corresponding to hardware acceleration devices manufactured by different manufacturers are complementary and compatible. Therefore, to ensure that the VM has a capability of invoking most of hardware pass-through devices in the hardware pass-through manner, a large quantity of drivers respectively corresponding to various hardware acceleration devices need to be pre-installed in the VM. That is, when the N types of hardware devices are the N types of hardware acceleration devices, a problem that a relatively large quantity of storage resources are occupied due to driver pre-installation becomes more serious. Therefore, the solution of installing the driver in real time in this embodiment of the present invention has a more obvious effect for saving a storage resource.

According to a second aspect, an embodiment of the present invention provides a host, where one or more virtual machines run on the host. The host is configured to: allocate a first hardware device to a target virtual machine on the host, where the first hardware device is deployed on the host; obtain a target driver package of the first hardware device from N pre-stored driver packages, where the N driver packages are driver packages of N types of hardware devices, a type of the first hardware device is one of the N types of hardware devices, and N is a positive integer greater than or equal to 1; and add the target driver package into the target virtual machine to enable the target virtual machine to read the target driver package. The host is configured to install the target driver package, where a driver obtained by installing the target driver package is used by the target virtual machine to invoke the first hardware device in a hardware pass-through manner.

With reference to the second aspect, in a first possible implementation of the second aspect, the host includes an allocation module, a driver management module, and a driver load module, where the allocation module is configured to allocate the first hardware device to the target virtual machine on the host, where the first hardware device is deployed on the host. The driver management module is configured to obtain the target driver package of the first hardware device from the N pre-stored driver packages, where the N driver packages are the driver packages of N types of hardware devices, the type of the first hardware device is one of the N types of hardware devices, and N is the positive integer greater than or equal to 1. The driver management module is further configured to add the target driver package into the target virtual machine to enable the target virtual machine to read the target driver package. The driver load module is configured to install the target driver package, where a driver obtained by installing the target driver package is used by the target virtual machine to invoke the first hardware device in the hardware pass-through manner.

By running the foregoing units, when allocating the first hardware device to the target virtual machine, the host adds the target driver package corresponding to the first hardware device into a location that can be used to store the target driver package on the target virtual machine. Correspondingly, the target virtual machine reads and installs the target driver package to obtain the driver of the first hardware device, and then invokes the first hardware device based on the driver. In this process, there is no need to pre-install, in the target virtual machine, a driver package corresponding to each of a plurality of hardware devices, but instead, once the hardware device is allocated to the target virtual machine, a driver package corresponding to a hardware device is almost immediately installed. This saves a storage resource occupied by the target virtual machine. In addition, in the prior art, a total quantity of pre-installed driver packages is limited, so that the target virtual machine can access only a limited quantity of hardware devices. The virtual machine in this embodiment of the present invention has a capability of invoking any hardware device, provided that a driver package of a hardware device is installed before the hardware device is invoked.

With reference to the second aspect, in a second possible implementation of the second aspect, the driver load module is further configured to uninstall a target driver and install a driver update package, where the target driver is a driver obtained by installing the target driver package, and the driver update package is an upgrade package of the target driver package or is a driver package of a second hardware device re-allocated by the host to the target virtual machine; and when the driver update package is the upgrade package of the target driver package, a driver obtained by installing the driver update package is used by the target virtual machine to invoke the first hardware device; or when the target driver package is the driver package of the second hardware device re-allocated by the host to the target virtual machine, a driver obtained by installing the driver update package is used by the target virtual machine to invoke the second hardware device.

That is, this embodiment of the present invention supports driver uninstallation and updating, and is applicable to a scenario in which the driver is upgraded and a scenario in which the driver is changed due to hardware device replacement. This improves user experience.

With reference to the second aspect or either of the foregoing implementations of the second aspect, in a third possible implementation of the second aspect, the allocation module is specifically configured to allocate a first hardware device to the target virtual machine when starting the target virtual machine.

That is, a prerequisite for performing an operation related to allocation of the first hardware device and installation of the driver corresponding to the first hardware device that is performed after the first hardware device is selected is that the host is started. This further clarifies that, according to this embodiment of the present invention, a driver of a pass-through device is installed in real time, instead of being pre-installed.

With reference to the second aspect or any one of the foregoing implementations of the second aspect, in a fourth possible implementation of the second aspect, that the driver management module adds the target driver package into the target virtual machine to enable the target virtual machine to read the target driver package is specifically: storing the target driver package in a file system of the target virtual machine for the target virtual machine to read; or storing the target driver package in a preset shared memory in the host for the target virtual machine to read.

With reference to the second aspect or any one of the foregoing implementations of the second aspect, in a fifth possible implementation of the second aspect, the N types of hardware devices are N types of hardware acceleration devices.

Currently, a relatively unified standard for hardware acceleration devices has not been formed in the industry, and drivers corresponding to hardware acceleration devices manufactured by different manufacturers are complementary and compatible. Therefore, to ensure that the VM has a capability of invoking most of hardware pass-through devices in the hardware pass-through manner, a large quantity of drivers respectively corresponding to various hardware acceleration devices need to be pre-installed in the VM. That is, when the N types of hardware devices are the N types of hardware acceleration devices, a problem that many storage resources are occupied due to driver pre-installation becomes more serious. Therefore, the solution of installing the driver in real time in this embodiment of the present invention has a more obvious effect for saving a storage resource.

According to a third aspect, an embodiment of the present invention provides a host. The host includes a processor and a memory, where the memory is configured to store data and a program, and the processor is configured to perform, by invoking the program stored in the memory, the following operations: allocating a first hardware device to a target virtual machine on the host, where the first hardware device is deployed on the host; obtaining a target driver package of the first hardware device from N pre-stored driver packages, where the N driver packages are driver packages of N types of hardware devices, a type of the first hardware device is one of the N types of hardware devices, and N is a positive integer greater than or equal to 1; adding the target driver package into the target virtual machine to enable the target virtual machine to read the target driver package; and installing the target driver package, where a driver obtained by installing the target driver package is used by the target virtual machine to invoke the first hardware device in a hardware pass-through manner.

By performing the foregoing operations, when allocating the first hardware device to the target virtual machine, the host adds the target driver package corresponding to the first hardware device into a location that can be used to store the target driver package on the target virtual machine. Correspondingly, the target virtual machine reads and installs the target driver package to obtain the driver of the first hardware device, and then invokes the first hardware device based on the driver. In this process, there is no need to pre-install, in the target virtual machine, a driver package corresponding to each of a plurality of hardware devices, but instead, once the hardware device is allocated to the target virtual machine, a driver package corresponding to a hardware device is almost immediately installed. This saves a storage resource occupied by the target virtual machine. In addition, in the prior art, a total quantity of pre-installed driver packages is limited, so that the target virtual machine can access only a limited quantity of hardware devices. The virtual machine in this embodiment of the present invention has a capability of invoking any hardware device, provided that a driver package of a hardware device is installed before the hardware device is invoked.

With reference to the third aspect, in a first possible implementation of the third aspect, after installing the target driver package, the processor is further configured to uninstall a target driver and install a driver update package by using the target virtual machine, where the target driver is a driver obtained by installing the target driver package, and the driver update package is an upgrade package of the target driver package or is a driver package of a second hardware device re-allocated by the host to the target virtual machine; and when the driver update package is the upgrade package of the target driver package, a driver obtained by installing the driver update package is used by the target virtual machine to invoke the first hardware device; or when the target driver package is the driver package of the second hardware device re-allocated by the host to the target virtual machine, a driver obtained by installing the driver update package is used by the target virtual machine to invoke the second hardware device.

That is, this embodiment of the present invention supports driver uninstallation and updating, and is applicable to a scenario in which the driver is upgraded and a scenario in which the driver is changed due to hardware device replacement. This improves user experience.

With reference to the third aspect or the first possible implementation of the third aspect, in a second possible implementation of the third aspect, that the processor allocates a first hardware device to a target virtual machine on the host includes: allocating the first hardware device to the target virtual machine when starting the target virtual machine.

That is, a prerequisite for performing an operation related to allocation of the first hardware device and installation of the driver corresponding to the first hardware device that is performed after the first hardware device is selected is that the host is started. This further clarifies that, according to this embodiment of the present invention, a driver of a pass-through device is installed in real time, instead of being pre-installed.

With reference to the third aspect, the first possible implementation of the third aspect, or the second possible implementation of the third aspect, in a third possible implementation of the third aspect, that the processor adds the target driver package into the target virtual machine to enable the target virtual machine to read the target driver package includes: storing the target driver package in a file system of the target virtual machine for the target virtual machine to read; or storing the target driver package in a preset shared memory in the host for the target virtual machine to read.

With reference to the third aspect, the first possible implementation of the third aspect, the second possible implementation of the third aspect, or the third possible implementation of the third aspect, in a fourth possible implementation of the third aspect, the N types of hardware devices are N types of hardware acceleration devices.

Currently, a relatively unified standard for hardware acceleration devices has not been formed in the industry, and drivers corresponding to hardware acceleration devices manufactured by different manufacturers are complementary and compatible. Therefore, to ensure that the VM has a capability of invoking most of hardware pass-through devices in the hardware pass-through manner, a large quantity of drivers respectively corresponding to various hardware acceleration devices need to be pre-installed in the VM. That is, when the N types of hardware devices are the N types of hardware acceleration devices, a problem that many storage resources are occupied due to driver pre-installation becomes more serious. Therefore, the solution of installing the driver in real time in this embodiment of the present invention has a more obvious effect for saving a storage resource.

According to a fourth aspect, an embodiment of the present invention further provides a computer storage medium, and the computer storage medium may be a non-volatile computer storage medium in which content is not lost upon a power failure. The storage medium stores a software program, and the software program is read and executed by one or more processors, to implement the method according to the first aspect or any one of the implementations of the first aspect.

According to a fifth aspect, an embodiment of the present invention further provides a host, where one or more virtual machines run on the host. The host is configured to: allocate a first hardware device to a target virtual machine on the host, where the first hardware device is deployed on the host; obtain a target driver package of the first hardware device from N pre-stored driver packages, where the N driver packages are driver packages of N types of hardware devices, a type of the first hardware device is one of the N types of hardware devices, and N is a positive integer greater than or equal to 1; and add the target driver package into the target virtual machine to enable the target virtual machine to read the target driver package, where a driver obtained by installing the target driver package is used by the target virtual machine to invoke the first hardware device in a hardware pass-through manner.

According to the embodiments of the present invention, when allocating the first hardware device to the target virtual machine, the host adds the target driver package corresponding to the first hardware device into a location that can be used to store the target driver package on the target virtual machine. Correspondingly, the target virtual machine reads and installs the target driver package to obtain the driver of the first hardware device, and then invokes the first hardware device based on the driver. In this process, there is no need to pre-install, in the target virtual machine, a driver package corresponding to each of a plurality of hardware devices, but instead, once the hardware device is allocated to the target virtual machine, a driver package corresponding to a hardware device is almost immediately installed. This saves a storage resource occupied by the target virtual machine. In addition, in the prior art, a total quantity of pre-installed driver packages is limited, so that the target virtual machine can access only a limited quantity of hardware devices. The virtual machine in this embodiment of the present invention has a capability of invoking any hardware device, provided that a driver package of a hardware device is installed before the hardware device is invoked.

### BRIEF DESCRIPTION OF DRAWINGS

FIG. 1 is a schematic diagram of a scenario in which a hardware device is invoked in the prior art;
FIG. 2 is a schematic diagram of another scenario in which a hardware device is invoked in the prior art;
FIG. 3 is a schematic diagram of an architecture of a cloud computing platform according an embodiment of the present invention;
FIG. 4 is a schematic structural diagram of a host according to an embodiment of the present invention;
FIG. 5 is a schematic flowchart of a driver management method according to an embodiment of the present invention;
FIG. 6 is a schematic flowchart of adding a driver package into a target virtual machine according to an embodiment of the present invention;
FIG. 7 is a schematic flowchart of installing a driver package in a target virtual machine according to an embodiment of the present invention;
FIG. 8 is a schematic flowchart of invoking a first hardware device by a target virtual machine according to an embodiment of the present invention; and
FIG. 9 is a schematic structural diagram of another host according to an embodiment of the present invention.

### DESCRIPTION OF EMBODIMENTS

The following describes embodiments of the present invention with reference to the accompanying drawings in the embodiments of the present invention.

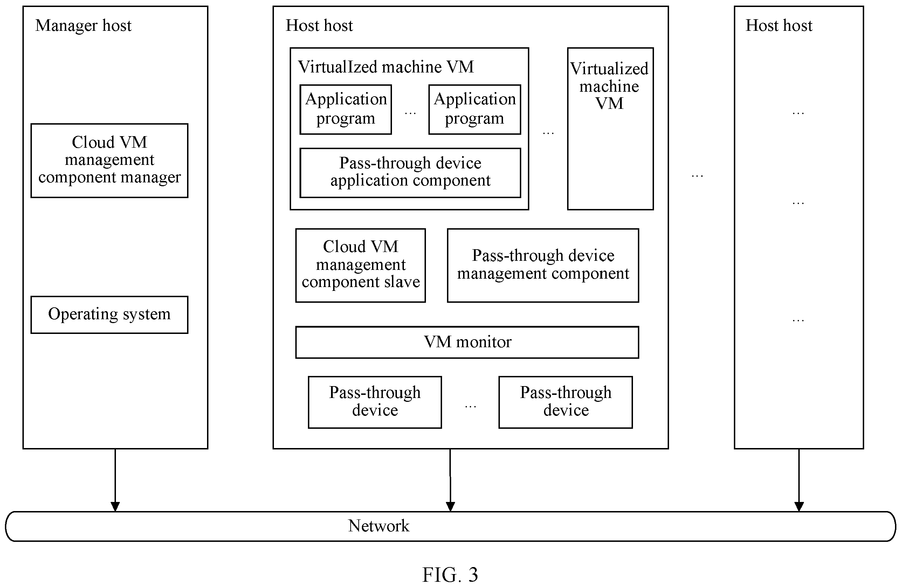

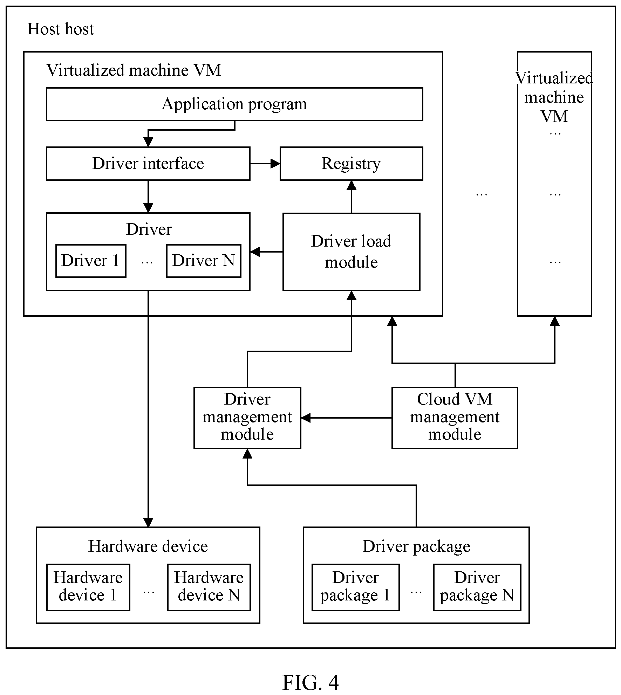

Referring to FIG. 3, FIG. 3 is a schematic diagram of an architecture of a cloud computing platform according an embodiment of the present invention. The cloud computing platform includes a cluster including one manager host and several hosts hosts. The manager host is responsible for managing all hosts hosts in the cluster, and each host is responsible for managing a VM on the host. A cloud VM management component manager is deployed on the manager host, and a cloud VM management component slave is deployed on each host. The cloud VM management component manager and the cloud VM management component slave communicate with each other, to complete cluster management. A pass-through device management component is deployed on each host to manage all hardware devices that are of the host and that can be passed through (if a VM on the host can access a hardware device based on a driver corresponding to the hardware device installed on the VM, the hardware device is a hardware device that can be passed through and that belongs the host), and a pass-through device application component is deployed on each VM to collaborate with the pass-through device management component, so as to invoke the pass-through device. A VM monitor assists the cloud VM management component slave in performing lifecycle management such as startup and shutdown of the VM. The host is mainly improved in the present invention. The following describes in detail the host with reference to FIG. 4.

Referring to FIG. 4, FIG. 4 is a schematic diagram of an internal structure of a host according to an embodiment of the present invention. In the host, some modules are function modules virtualized by software, and some modules are real hardware. Details of each module in the host are described as follows:
1. A hardware device may be a device that can be deployed on the host, such as a hardware acceleration (English: hardware acceleration) device (a device configured to accelerate service processing), a mouse, a keyboard, and a network adapter, and can be passed through inside of a VM for the VM to use. A function module that is used by the host to allocate a hardware device to the VM may be referred to as an allocation module, and a function of the allocation module may be implemented by a cloud VM management module or the like described below.
2. A driver package is an installable driver file stored in the host. Each hardware device needs to correspond to at least one driver package. It can be understood that the VM needs to use a driver package corresponding to a hardware device to successfully invoke the hardware device.
3. A cloud VM management module is a software function module deployed on the host, and is responsible for performing VM lifecycle management for the host.
4. A driver management module is a software function module deployed on the host, and is configured to manage all hardware device driver packages of the host, including adding a corresponding driver package into the VM. A combination of the driver management module and the cloud VM management module may be considered as the foregoing cloud VM management component slave.
5. A driver load module is a software function module deployed on the VM, and is responsible for scanning the driver package of the device added by the host, completing installation of the driver package, enabling the driver package, and the like.
6 A driver is a software function module obtained by installing a driver package by the driver load module.
7. A driver interface is a software function module deployed on the VM, and an application program can invoke a driver of an enabled hardware device by using the driver interface, to invoke the hardware device.
8. A registry is a data table deployed on the VM, and is used to hold information about all hardware devices allocated to the VM, driver information of the hardware devices, capability information of the hardware devices, and the like.
9. An application program is a software function module deployed on the VM, and uses the hardware device. That the VM invokes or uses a hardware device includes that the application program on the VM invokes or uses the hardware device.

In this embodiment of the present invention, when the VM needs to use a hardware device, the host adds a driver package of the hardware device into the VM based on the foregoing modules. Correspondingly, the VM installs the driver package and obtains the driver of the hardware device. Then, the VM invokes the hardware device based on the driver.

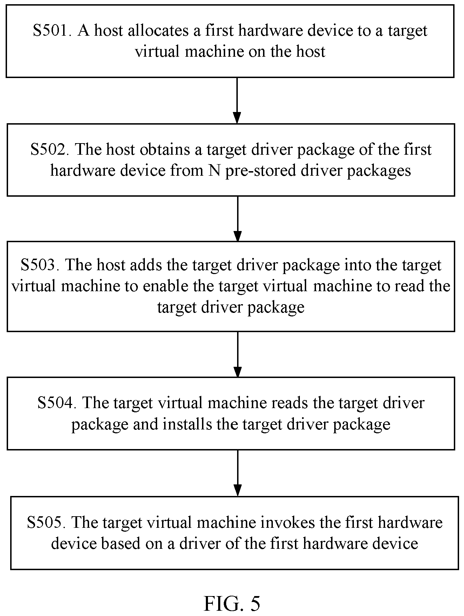

It should be noted that, in practical application, many of the foregoing modules may also be named as other names; some of the foregoing modules may alternatively be combined, and if two modules are combined, the combined modules have functions of the two modules; and the foregoing modules may also be subdivided into a plurality of smaller modules, and each smaller module has some functions of a module that are before the module is subdivided. The following describes this embodiment of the present invention in more detail in consideration of the foregoing modules and with reference to FIG. 5.

Referring to FIG. 5, FIG. 5 is a schematic flowchart of a driver management method according to an embodiment of the present invention. The method generally includes steps S501 to S505.

Step S501. A host allocates a first hardware device to a target virtual machine on the host.

Specifically, one or more virtual machines may be deployed on the host. This embodiment of the present invention relates to an operation related to the virtual machine. For ease of understanding, the following uses one virtual machine on the host as an example for description. The virtual machine may be referred to as the target virtual machine. When there is another virtual machine on the host, a feature related to the target virtual machine subsequently described is also applicable to the another virtual machine.

An operating system and an application program are installed on the target virtual machine. During running, the application program needs to invoke a hardware device on the host to implement a corresponding function. For example, a network-related application program needs to invoke a network adapter to enable the target virtual machine to connect to a network. For another example, some application programs need to invoke a hardware acceleration device (or referred to as a "module") to replace a software algorithm, so as to take full advantage of an inherent fast characteristic of the hardware to increase a processing speed of the application program, and the like. Here, the network adapter and the hardware acceleration device both are hardware devices deployed on the host, and one or more hardware devices may be deployed on the host. The host allocates a hardware device to the target virtual machine according to a running requirement of the application program of the target virtual machine. For ease of description, the hardware device allocated to the target virtual machine may be referred to as the first hardware device.

The host may allocate a hardware device to the target virtual machine according to states of hardware devices maintained by the host, for example, allocate, to the target virtual machine, a hardware device that is not invoked by a virtual machine other than the target virtual machine. Alternatively, the host may allocate a hardware device according to a requirement of the target virtual machine. Generally, different hardware devices have different processing capabilities (for example, there may be a difference in acceleration capabilities of different hardware acceleration devices). The host may pre-obtain a desired processing capability of the target virtual machine, and then select a hardware acceleration device that can satisfy the processing capability to allocate the hardware acceleration device to the target virtual machine. In the prior art, there are many other rules based on which the host allocates the hardware device to the target virtual machine, and these rules are not listed herein one by one.

Step S502. The host obtains a target driver package of the first hardware device from N pre-stored driver packages.

Specifically, when N types of hardware devices are deployed on the host, at least N installation packages are stored on the host, where N is a positive integer greater than or equal to 1. Different types of hardware devices are corresponding to different driver packages, and same types of hardware devices are corresponding to a same driver package. Some hardware devices are based on a same standard, protocol, or the like, these hardware devices can be invoked by using a same driver, and therefore, these hardware devices can be classified as a same type of hardware devices. It can be understood that, in the host, there is a correspondence between each hardware device and each driver package. Therefore, after determining the first hardware device allocated to the target virtual machine, the host may determine, based on the correspondence, a driver package corresponding to the first hardware device. In this embodiment of the present invention, the driver package corresponding to the first hardware device is referred to as the target driver package. In practical application, the driver package of the hardware device may be updated. In this case, the target driver package may be specifically a latest driver package of the first hardware device.

Step S503. The host adds the target driver package into the target virtual machine to enable the target virtual machine to read the target driver package.

Specifically, the host adds (which may also be referred to as "stores", "holds", or the like) the target driver package into a pre-specified location, for example, stores the target driver package in a file system of the target virtual machine for the target virtual machine to read, and for another example, stores the target driver package in a preset shared memory on the host for the target virtual machine to read. It should be noted that the target virtual machine can read information from the pre-specified location, and when the target driver package is added into the pre-specified location, the target virtual machine can read the target driver package.

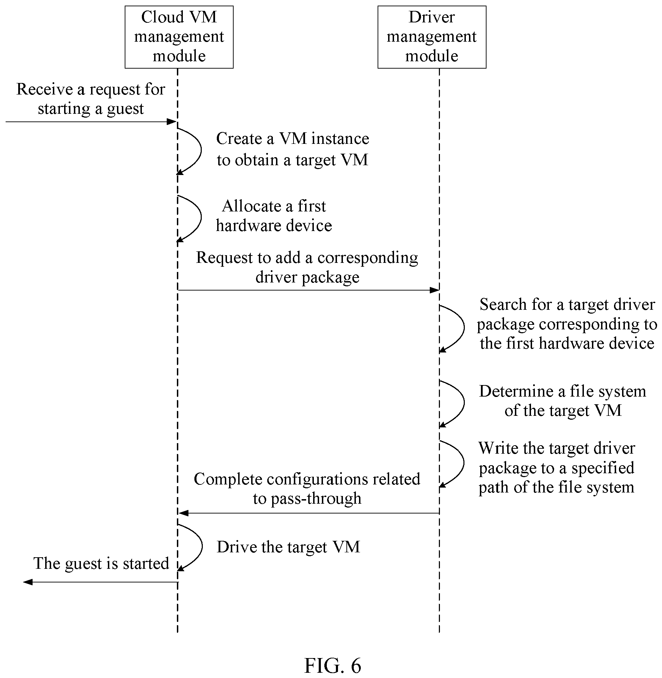

The following describes, with reference to FIG. 6, a process of adding the target driver package into the target virtual machine. The process is as follows:
a. A cloud VM management module receives an external request message for starting a guest.
b. The cloud VM management module creates a VM instance corresponding to the guest, where the instance includes a file system, and the created VM instance may be referred to as a target VM (that is, "a target virtual machine").
c. The cloud VM management module allocates a pass-through hardware device to the target VM, where the allocated hardware device is the first hardware device.
d. The cloud VM management module notifies a driver management module to add the driver package into the target VM.
e. The driver management module selects, according to the hardware device allocated to the VM, the driver package corresponding to the hardware device, where the selected driver package may be referred to as the target driver package; and then adds the target driver package into the specified location (for example, write the target driver package to a specified path of the file system of the target VM, or write the target driver package to the shared memory of the host), so that the target VM may read the driver package.
f. The cloud VM management module starts the target VM, and passes through the first hardware device to the target VM.

It can be understood that FIG. 6 describes only one possible implementation, and other possible implementations are not listed herein one by one.

Step S504. The target virtual machine reads the target driver package and installs the target driver package.

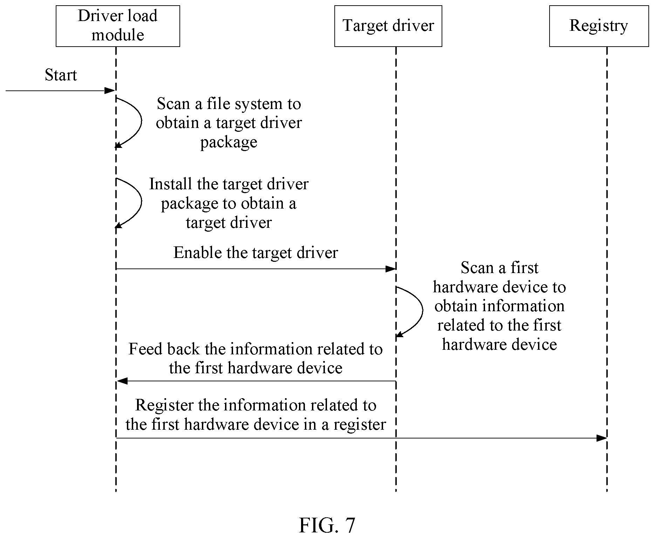

Specifically, a driver of the first hardware device is obtained by installing the target driver package. The following describes, by using an example with reference to FIG. 7, how the target virtual machine installs the target driver package. A procedure is as follows:
i. The VM activates a driver load module in an initialization phase.
j. The driver load module scans a specified location to obtain the added driver package.
k. The driver load module installs the obtained driver package to obtain a driver.
l. The driver load module enables the driver.
m. The driver detects information about a corresponding hardware device, for example, a capability of the hardware device.
n. The driver load module registers, in a registry, the information about the hardware device obtained by the driver for query.

It can be understood that, the target driver package has been added into the specified position in the previous steps, and therefore, in the procedure described in FIG. 7, the target driver package is similarly obtained, the target driver package is installed to obtain the target driver, the information about the first hardware device is obtained by using the target driver, and the information about the first hardware device is registered in the registry. It can be understood that FIG. 7 describes only one possible implementation, and other possible implementations are not listed herein one by one.

Step S505. The target virtual machine invokes the first hardware device based on a driver of the first hardware device, where a manner of invoking the first hardware device may be a hardware pass-through manner.

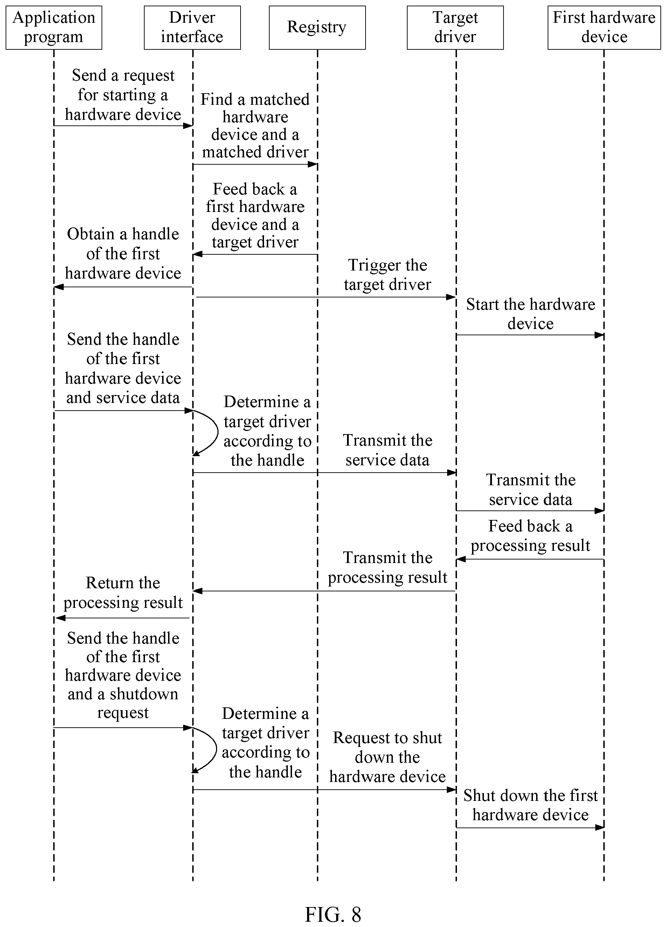

Specifically, invoking the first hardware device the target virtual machine is usually triggered by an application program on the target virtual machine. The following describes, by using an example with reference to FIG. 8, how the target virtual machine invokes the first hardware device. FIG. 8 generally includes three processes: starting the first hardware device, obtaining processing data from the first hardware device, and shutting down the first hardware device. A specific procedure is as follows:
r. An application program sends, to a driver interface, a request for starting a hardware device, where the request carries information such as a required capability (for example, a DES encryption/decryption capability); the driver interface queries, from the registry according to the required capability of the application program, information about the first hardware device matching with the capability and information about the target driver corresponding to the first hardware device; and the driver interface triggers the target driver, and correspondingly, the target driver starts the first hardware device. In addition, the driver interface further feeds back a handle of the first hardware device to the application program.
s. The application program sends the handle of the first hardware device and service data to the driver interface; the driver interface determines, according to the handle of the first hardware device, that a driver to be used is the target driver, and then transmits the service data to the target driver; the target driver transmits the service data to the first hardware device; the first hardware device processes the service data to obtain a processing result, and feeds back the processing result to the target driver; the target driver transmits the processing result to the driver interface; and the driver interface transmits the processing result to the application program.
t. The application program sends the handle of the first hardware device and a shutdown request to the driver interface; the driver interface determines, according to the handle of the first hardware device, that the driver to be used is the target driver, and then requests the target driver to shut down the first hardware device; and correspondingly, the target driver shuts down the first hardware device.

It can be understood that FIG. 8 describes only one possible implementation, and other possible implementations are not listed herein one by one.

The foregoing describes, with reference to steps S501 to S505, processes such as hardware device allocation, driver addition and installation, and hardware device invocation. In these processes, there are other optional implementation solutions in some steps, and the following generally describes several optional implementation solutions.

In an optional solution, the host specifically allocates the first hardware device to the target virtual machine when starting the target virtual machine; or the host may detect in real time, when the target virtual machine is running, whether the target virtual machine needs to use the hardware device, and if the host detects that the target virtual machine needs to use the hardware device, the host allocates the first hardware device to the target virtual machine. These two optional solutions more clearly show that the driver package is installed in real time according to a requirement, instead of being pre-installed.

In an optional solution, the N types of hardware devices described in this embodiment of the present invention may be specifically N types of hardware acceleration devices. Currently, a relatively unified standard for hardware acceleration devices has not been formed in the industry, and drivers corresponding to hardware acceleration devices manufactured by different manufacturers are complementary and compatible. Therefore, to ensure that the VM has a capability of invoking most of hardware pass-through devices in the hardware pass-through manner, a large quantity of drivers respectively corresponding to various hardware acceleration devices need to be pre-installed in the VM. That is, when the N types of hardware devices are the N types of hardware acceleration devices, a problem that many storage resources are occupied due to driver pre-installation becomes more serious. Therefore, the solution of installing the driver in real time in this embodiment of the present invention has a more obvious effect for saving a storage resource.

In an optional solution, this embodiment of the present invention may further include the following step: the target virtual machine uninstalls a target driver and installs an update driver package, where the target driver is the driver obtained by installing the target driver package.

In practical application, the driver package (that is, the target driver package) of the first hardware device may be upgraded, or the host may allocate another hardware device to the target virtual machine (that is, the first hardware device is not the hardware device allocated to the target virtual machine), and the allocated hardware device may be referred to as a second hardware device. To adapt to these cases, the driver update package may be an upgrade package of the target driver package or is a driver package of the second hardware device re-allocated by the host to the target virtual machine. For implementations of driver update package addition, installation, and the like, refer to the foregoing descriptions of the target driver package. Optionally, the target virtual machine may delete the target driver package previously added into the target virtual machine. In particular, when the driver update package is the upgrade package of the target driver package, the target driver package may be not useful after the driver update package is added.

It can be understood that, when the driver update package is the upgrade package of the target driver package, a driver obtained by installing the driver update package is used by the target virtual machine to invoke the first virtual device; and when the target driver package is the driver package of the second hardware device re-allocated by the host to the target virtual machine, a driver obtained by installing the driver update package is used by the target virtual machine to invoke the second hardware device.

According to the method described in FIG. 5, when allocating the first hardware device to the target virtual machine, the host adds the target driver package corresponding to the first hardware device into a location that can be used to store the target driver package on the target virtual machine. Correspondingly, the target virtual machine reads and installs the target driver package to obtain the driver of the first hardware device, and then invokes the first hardware device based on the driver. In this process, there is no need to pre-install, in the target virtual machine, a driver package corresponding to each of a plurality of hardware devices, but a driver package corresponding to a hardware device is almost immediately installed once the hardware device has been allocated to the target virtual machine. This saves a storage resource occupied by the target virtual machine. In addition, in the prior art, a total quantity of pre-installed driver packages is limited, so that the target virtual machine can access only a limited quantity of hardware devices. The virtual machine in this embodiment of the present invention has a capability of invoking any hardware device, provided that a driver package of a hardware device is installed before the hardware device is invoked.

The foregoing describes in detail the method according to this embodiment of the present invention. For better implementing the foregoing solutions according to this embodiment of the present invention, the following correspondingly provides an apparatuses according to an embodiment of the present invention.

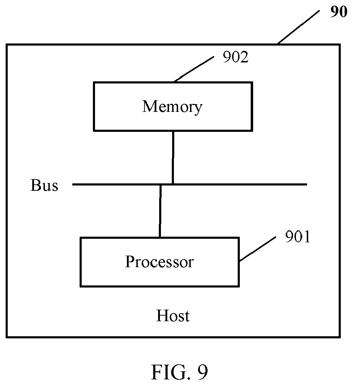

Referring to FIG. 9, FIG. 9 is a host 90 according to an embodiment of the present invention. The host 90 includes a processor 901 and a memory 902, where the processor 901 and the memory 902 are connected by using a bus.

The memory 902 includes but is not limited to a random access memory (RAM), a read-only memory (ROM), an erasable programmable read-only memory (EPROM or a flash memory), or a portable read-only memory (CD-ROM), and the memory 902 is configured to store a related instruction and data.

The processor 901 may be one or more central processing units (English: Central Processing Unit, CPU for short). When the processor 901 is one CPU, the CPU may be a single-core CPU or a multi-core CPU.

The processor 901 in the host 90 is configured to read program code stored in the memory 902 and execute the following operations:
allocating a first hardware device to a target virtual machine on the host, where the first hardware device is deployed on the host;
obtaining a target driver package of the first hardware device from N pre-stored driver packages, where the N driver packages are driver packages of N types of hardware devices, a type of the first hardware device is one of the N types of hardware devices, and N is a positive integer greater than or equal to 1;
adding the target driver package into the target virtual machine to enable the target virtual machine to read the target driver package; and
installing the target driver package, where a driver obtained by installing the target driver package is used by the target virtual machine to invoke the first hardware device in a hardware pass-through manner.

By performing the foregoing operations, when allocating the first hardware device to the target virtual machine, the host adds the target driver package corresponding to the first hardware device into a location that can be used to store the target driver package on the target virtual machine. Correspondingly, the target virtual machine reads and installs the target driver package to obtain the driver of the first hardware device, and then invokes the first hardware device based on the driver. In this process, there is no need to pre-install, in the target virtual machine, a driver package corresponding to each of a plurality of hardware devices, but a driver package corresponding to a hardware device is almost immediately installed once the hardware device has been allocated to the target virtual machine. This saves a storage resource occupied by the target virtual machine. In addition, in the prior art, a total quantity of pre-installed driver packages is limited, so that the target virtual machine can access only a limited quantity of hardware devices. The virtual machine in this embodiment of the present invention has a capability of invoking any hardware device, provided that a driver package of a hardware device is installed before the hardware device is invoked.

In an optional solution, after installing the target driver package, the processor 901 is further configured to uninstall a target driver and install a driver update package, where the target driver is the driver obtained by installing the target driver package, and the driver update package is an upgrade package of the target driver package or is a driver package of a second hardware device re-allocated by the host to the target virtual machine; and when the driver update package is the upgrade package of the target driver package, a driver obtained by installing the driver update package is used by the target virtual machine to invoke the first hardware device; or when the target driver package is the driver package of the second hardware device re-allocated by the host to the target virtual machine, a driver obtained by installing the driver update package is used by the target virtual machine to invoke the second hardware device.

That is, this embodiment of the present invention supports driver uninstallation and updating, and is applicable to a scenario in which the driver is upgraded and a scenario in which the driver is changed due to hardware device replacement. This improves user experience.

In another optional solution, that the processor 901 allocates a first hardware device to a target virtual machine on the host includes: allocating the first hardware device to the target virtual machine when starting the target virtual machine.

That is, a prerequisite for performing an operation related to allocation of the first hardware device and installation of the driver corresponding to the first hardware device that is performed after the first hardware device is selected is that the host is started. This further clarifies that, according to this embodiment of the present invention, a driver of a pass-through device is installed in real time, instead of being pre-installed.

In another optional solution, that the processor 901 adds the target driver package into the target virtual machine to enable the target virtual machine to read the target driver package includes: storing the target driver package in a file system of the target virtual machine for the target virtual machine to read; or storing the target driver package in a preset shared memory in the host for the target virtual machine to read.

In another optional solution, the N types of hardware devices are N types of hardware acceleration devices.

Currently, a relatively unified standard for hardware acceleration devices has not been formed in the industry, and drivers corresponding to hardware acceleration devices manufactured by different manufacturers are complementary and compatible. Therefore, to ensure that the VM has a capability of invoking most of hardware pass-through devices in the hardware pass-through manner, a large quantity of drivers respectively corresponding to various hardware acceleration devices need to be pre-installed in the VM. That is, when the N types of hardware devices are the N types of hardware acceleration devices, a problem that many storage resources are occupied due to driver pre-installation becomes more serious. Therefore, the solution of installing the driver in real time in this embodiment of the present invention has a more obvious effect for saving a storage resource.

It should be noted that, for specific implementations of all operations, refer to the descriptions corresponding to the method embodiment shown in FIG. 5.

According to the host 90 described in FIG. 9, when allocating the first hardware device to the target virtual machine, the host adds the target driver package corresponding to the first hardware device into a location that can be used to store the target driver package on the target virtual machine. Correspondingly, the target virtual machine reads and installs the target driver package to obtain the driver of the first hardware device, and then invokes the first hardware device based on the driver. In this process, there is no need to pre-install, in the target virtual machine, a driver package corresponding to each of a plurality of hardware devices, but a driver package corresponding to a hardware device is almost immediately installed once the hardware device has been allocated to the target virtual machine. This saves a storage resource occupied by the target virtual machine. In addition, in the prior art, a total quantity of pre-installed driver packages is limited, so that the target virtual machine can access only a limited quantity of hardware devices. The virtual machine in this embodiment of the present invention has a capability of invoking any hardware device, provided that a driver package of a hardware device is installed before the hardware device is invoked.

In conclusion, according to this embodiment of the present invention, when allocating the first hardware device to the target virtual machine, the host adds the target driver package corresponding to the first hardware device into a location that can be used to store the target driver package on the target virtual machine. Correspondingly, the target virtual machine reads and installs the target driver package to obtain the driver of the first hardware device, and then invokes the first hardware device based on the driver. In this process, there is no need to pre-install, in the target virtual machine, a driver package corresponding to each of a plurality of hardware devices, but a driver package corresponding to a hardware device is almost immediately installed once the hardware device has been allocated to the target virtual machine. This saves a storage resource occupied by the target virtual machine. In addition, in the prior art, a total quantity of pre-installed driver packages is limited, so that the target virtual machine can access only a limited quantity of hardware devices. The virtual machine in this embodiment of the present invention has a capability of invoking any hardware device, provided that a driver package of a hardware device is installed before the hardware device is invoked.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium includes any medium that can store program code, such as a ROM, a random access memory RAM, a magnetic disk, or an optical disc.

## Claims

1. A driver management method, comprising:
allocating, by a host, a first hardware device to a target virtual machine on the host, wherein the first hardware device is deployed on the host;
obtaining, by the host, a target driver package of the first hardware device from N pre-stored driver packages, wherein the N driver packages are driver packages of N types of hardware devices, a type of the first hardware device is one of the N types of hardware devices, and N is a positive integer greater than or equal to 1;
adding, by the host, the target driver package into the target virtual machine to enable the target virtual machine to read the target driver package; and
installing, by the target virtual machine, the target driver package, wherein a driver obtained by installing the target driver package is used by the target virtual machine to invoke the first hardware device in a hardware pass-through manner.

2. The method according to claim 1, wherein after the installing, by the target virtual machine, the target driver package, the method further comprises:
uninstalling, by the target virtual machine, a target driver, and installing a driver update package, wherein the target driver is the driver obtained by installing the target driver package, and the driver update package is an upgrade package of the target driver package or is a driver package of a second hardware device re-allocated by the host to the target virtual machine; and when the driver update package is the upgrade package of the target driver package, a driver obtained by installing the driver update package is used by the target virtual machine to invoke the first hardware device; or when the target driver package is the driver package of the second hardware device re-allocated by the host to the target virtual machine, a driver obtained by installing the driver update package is used by the target virtual machine to invoke the second hardware device.

3. The method according to claim 1 or 2, wherein the allocating, by a host, a first hardware device to a target virtual machine on the host comprises:
allocating, by the host, the first hardware device to the target virtual machine when starting the target virtual machine.

4. The method according to any one of claims 1 to 3, wherein the adding, by the host, the target driver package into the target virtual machine to enable the target virtual machine to read the target driver package comprises:
storing, by the host, the target driver package in a file system of the target virtual machine for the target virtual machine to read; or storing the target driver package in a preset shared memory in the host for the target virtual machine to read.

5. The method according to any one of claims 1 to 4, wherein the N types of hardware devices are N types of hardware acceleration devices.

6. A host, wherein one or more virtual machines run on the host, and the host comprises:
an allocation module, configured to allocate a first hardware device to a target virtual machine on the host, wherein the first hardware device is deployed on the host; and
a driver management module, configured to obtain a target driver package of the first hardware device from N pre-stored driver packages, wherein the N driver packages are driver packages of N types of hardware devices, a type of the first hardware device is one of the N types of hardware devices, and N is a positive integer greater than or equal to 1; and
the driver management module is further configured to add the target driver package into the target virtual machine to enable the target virtual machine to read the target driver package; wherein
the target virtual machine comprises:
a driver load module, configured to install the target driver package, wherein a driver obtained by installing the target driver package is used by the target virtual machine to invoke the first hardware device in a hardware pass-through manner.

7. The host according to claim 6, wherein the driver load module is further configured to:
uninstall a target driver and install a driver update package, wherein the target driver is the driver obtained by installing the target driver package, and the driver update package is an upgrade package of the target driver package or is a driver package of a second hardware device re-allocated by the host to the target virtual machine; and when the driver update package is the upgrade package of the target driver package, a driver obtained by installing the driver update package is used by the target virtual machine to invoke the first hardware device; or when the target driver package is the driver package of the second hardware device re-allocated by the host to the target virtual machine, a driver obtained by installing the driver update package is used by the target virtual machine to invoke the second hardware device.

8. The host according to claim 6 or 7, wherein the allocation module is specifically configured to allocate the first hardware device to the target virtual machine when starting the target virtual machine.

9. The host according to any one of claims 6 to 8, wherein that the driver management module adds the target driver package into the target virtual machine to enable the target virtual machine to read the target driver package is specifically configured to:
store the target driver package in a file system of the target virtual machine for the target virtual machine to read; or storing the target driver package in a preset shared memory in the host for the target virtual machine to read.

10. The host according to any one of claims 6 to 9, wherein the N types of hardware devices are N types of hardware acceleration devices.
